# EUROPÄISCHE PATENTSCHRIFT

(11) **EP 2 901 842 B1**
(45) Veröffentlichungstag und Bekanntmachung des Hinweises auf die Patenterteilung: **03.10.2018**
(21) Anmeldenummer: 15000286.3
(22) Anmeldetag: 09.11.2010
(51) Int. Cl.: A01D 78/02, A01D 84/00, A01D 89/00

(54) **An der Frontseite einer eine angetriebene Fahrachse aufweisenden und an Holmen manuell geführten Arbeitsmaschine anbaubare, mit der Arbeitsmachine antriebsverbindbare Fördereinrichtung**
Conveyor device which can be attached by drive connection at the front end of a manually guided work machine comprising a driven axle
Dispositif de transport pouvant être raccordé par entraînement à une machine de travail guidée manuellement et présentant un axe mobile entraîné

(43) Veröffentlichungstag der Anmeldung: 05.08.2015
(62) Teilanmeldung aus: 10405216.2
(73) Patentinhaber: Rapid Technic AG, 8956 Killwangen (CH)
(72) Erfinder: Hirschi, Michael, CH-3555 Trubschachen (CH)
(74) Vertreter: Fenner, Werner

(56) Entgegenhaltungen:
- EP-A1- 2 047 739
- DE-C- 949 782
- GB-A- 2 215 971
- US-A- 2 636 335

## Beschreibung

Die Erfindung betrifft eine Einrichtung zur Bergung von gemähtem, auf der gemähten Bodenoberfläche liegenden landwirtschaftlichen Halmgut, mit einer an der Frontseite einer einachsigen, an Holmen manuell lenkbar geführten, eine angetriebene Fahrachse aufweisenden Arbeitsmaschine angebauten, mit einer Zapfwelle der Arbeitsmaschine antriebsverbundenen Fördereinrichtung, die eine gemähtes Halmgut mittels angetriebenen Förderzinken von der Bodenoberfläche aufnehmende Aufnahmevorrichtung aufweist.

Die Bergung von gemähtem, auf dem Boden liegenden landwirtschaftlichen Halmgut wird seit Jahrzehnten mit sogenannten Kreiselschwadern oder Universalmaschinen durchgeführt, die an der Heckseite oder der Frontseite eines Traktors oder ähnlichen Fahrzeuges, beispielsweise an einer Dreipunkt-Anhängevorrichtung anbaubar sind. Diese Geräte oder Maschinen dienen dem Zusammenrechen von auf einer gemähten landwirtschaftlichen Bodenoberfläche liegendem landwirtschaftlichen Halmgut, das von einem verteilten Zustand in eine Schwadformation versetzt wird, um beispielsweise die zur Ausbreitung des Halmguts zu Silage oder Heu freigerechte Bodenoberfläche über Nacht zur Trocknung freilegen zu können oder um das Halmgut von einer Schwadformation mittels Lade- oder Erntewagen aufnehmen zu können. Bei der Bildung einer Schwad wird ein Teil des Halmguts von einer verteilten resp. gezetteten Formation getrennt und eine gerechte Fahrgasse gebildet, die beim Ziehen einer nächsten Schwad durch den Traktor befahren wird.

Zum Zweck des seitlichen Schwadbildens wurde wie bei den oben beschriebenen Maschinen gemäss EP 0 069 059 A1 ein fahrbares, an der Heckseite eines Traktors oder dgl. anbaubares, fahrbares Gerät entwickelt, das eine Schnittgutaufnahme-Vorrichtung zur Behandlung von geschnittenem Pflanzengut aufweist. Dabei wird das zum Trocknen auf dem Feld liegende, bereits schwadenförmig geordnete Pflanzengut vom fahrbaren Gerät mittels einer Schnittgutaufnahme-Vorrichtung vom Boden aufgenommen und auf einer mindestens teilweise schraubenlinienförmig räumlich gebogenen Leitfläche geführt, bis es sich überschlägt und über eine Abrutschsicherung von der Leitfläche auf den Boden abgelegt wird.

Die US 2 636 335 beschreibt eine Maschine zum Rechen und Wenden von gemähtem, auf einem landwirtschaftlichen Feld oder Acker liegenden Heu oder Stroh resp. eine Maschine zum Wenden von Halmgut, das feucht geworden ist und durch einen Arbeitsvorgang zum Trocknen aufgelockert werden soll.

Bei der vorveröffentlichten GB 2 215 971 A handelt es sich um eine fahrbare Einrichtung zum Zusammentragen von zwei voneinander getrennten, parallelen Schwaden landwirtschaftlichen Halmguts zu einer Schwad, wobei die erste Schwad mittel Pic-up-Trommel aufgenommen und durch ein nachgeschaltetes Querförderband auf die seitlich versetzte zweite Schwad abgelegt wird.

In Hanglagen sind diese Maschinen nicht zuletzt wegen der Umsturzgefahr und unzureichender Lenkung der Vorderachse von Traktoren für die Bergung von Halmgut ungeeignet, zumal das Mähen in hügeligen Gebieten aus diesen Gründen mit sogenannten Motormähern erfolgt, die eine angetriebene Fahrachse mit einem vorgelagerten, auf dem Boden abgestützten Mähbalken aufweisen und von einer Bedienungsperson geführt und gesteuert werden. Das einzubringende liegende Halmgut (Heu oder Emd), wird deshalb in steilen Hanglagen mittels Handrechen von oben nach unten zusammengerecht und dazwischen aufgenommen und u.a. in Tüchern gebunden nach unten getragen.
Diese Vorgehensweise ist umständlich, arbeitsintensiv, zeitraubend und nur mit mehreren Personen einigermassen wirtschaftlich und im Interesse einer natürlichen Landwirtschaft durchführbar.

Es ist Aufgabe der vorliegenden Erfindung, eine Maschine als Grundlage zur Bergung von gemähtem landwirtschaftlichen Halmgut zu schaffen, durch welche das Halmgut auf maschinelle Art, insbesondere in Berggebieten, und bei Schlechtwetteraussichten in nützlicher Zeit zusammengetragen werden kann.

Die Erfindung geht einen neuen, für den Fachmann der Landtechnik aufgrund negativer Auffassungen als vorerst unüberwindbar scheinenden Weg zur Lösung der Aufgabe wie folgt, indem die an der Arbeitsmaschine frontseitig mittels Gestell und vor der angetriebenen Fahrachse der Arbeitsmaschine befestigte Aufnahmevorrichtung einen quer zur Fortbewegungsrichtung sich erstreckenden und durch die Zapfwelle angetriebenen Zinkenrotor aufweist, der durch an einer Welle nebeneinander angeordnete, gemeinsam und in Bodennähe gleichsinnig mit der Fortbewegungsrichtung drehende Zinkenräder mit abstehenden Förder- oder Arbeitszinken ausgebildet und auf der Bodenoberfläche abgestützt ist.
Wesentlich für einen erfolgreichen Arbeitseinsatz resp. ein gutes Funktionieren der erfindungsgemässen Maschine ist die hinter der an der Frontseite der Arbeitsmaschine befestigten Aufnahmevorrichtung angeordnete, angetriebene und lenkbare Fahrachse der Arbeitsmaschine.

Eine solche Arbeitsmaschine erweist sich als besonders geeignet bei der Heuwerbung oder Futterernte zur Bergung von angetrocknetem oder trockenem Halmgut nach dem Mähen, indem beispielsweise nach der Aufnahmevorrichtung ein seitliches Ablegen des Förderstromes zur Schwadbildung erreichbar ist.
Ein solcher Effekt tritt auch auf horizontalem Gelände in reduziertem Mass ein, wobei auch da wie dort eine Durchlüftung und Auflockerung des Halmguts eintritt. Somit kann die Arbeitsmaschine zum Mähen und/oder zum Fördern des gemähten Halmguts verwendet werden.
Vorteilhaft sind bei der Erfindung die Förder- oder Arbeitszinken gesteuert und in einem oberschlächtigen Förderbereich des Zinkenrotors nach unten eintauchend von dem Förderstrom des Halmguts sich lösend ausgebildet, sodass eine schonende Behandlung des transportierten Halmguts entsteht.
Vorzugsweise sind zwischen den Zinkenrädern Leitlamellen eines Leitorgans angeordnet, die das aufgenommene Halmgut über den Zinkenrotor führen resp. beim Transport stützen.
Zur Nutzung der Eigenschaften und für eine störungsfreie Überführung des Halmguts im Anschluss an den oberschlächtigen Förderbereich des Zinkenrotors kann der Aufnahmevorrichtung ein Förderabschnitt förderwirksam nachgeschaltet sein. Zur Begünstigung der manuellen Führung und zur gleichmässigen Bodenausrichtung der Aufnahmevorrichtung kann die Fördereinrichtung durch wenigstens eine mit dem Gestell verbundene Stützrolle ausgebildet sein.
Um die eingeschlagene Fortbewegungsrichtung einhalten zu können, ist hierzu vorteilhaft benachbart zu einer Stützrolle eine einen Spurkranz aufweisende, gegenüber der Stützrolle höhenverstellbare Spurrolle vorgesehen.

Die Anordnung einer Spurrolle unterstützt die Einhaltung der Fortbewegungsrichtung, wenn sie in Fortbewegungsrichtung betrachtet ausserhalb der Stützrolle angeordnet ist.

Nachfolgend wird die Erfindung unter Bezugnahme auf den zitierten resp. den zitierenden Stand der Technik und die Zeichnung, auf die bezüglich aller in der Beschreibung nicht näher erwähnten Einzelheiten verwiesen wird, anhand eines Ausführungsbeispiels erläutert. In der Zeichnung zeigen:
- Fig. 1: eine räumliche Darstellung einer zur Bergung von gemähtem landwirtschaftlichen Halmgut erfindungsgemässen Fördereinrichtung an einer einachsigen Arbeitsmaschine mit Holmlenkung,
- Fig. 2: eine planimetrische Darstellung einer Draufsicht auf die in Fig. 1 veranschaulichte, angebaute Fördereinrichtung,
- Fig. 3: eine Seitenansicht der in den Fig. 1 und 2 dargestellten, angebauten Fördereinrichtung,
- Fig. 4: eine Ansicht von der Bedienungsseite der in den Fig. 1 bis 3 gezeigten, angebauten Fördereinrichtung,
- Fig. 5: eine räumliche Darstellung der in den Fig. 1 bis 4 ersichtlichen Fördereinrichtung von der Bedienungsseite aus, und
- Fig. 6: eine räumliche Darstellung der Fördereinrichtung ohne Anbaugestell und Anstellorgan von der Bedienungsseite aus.

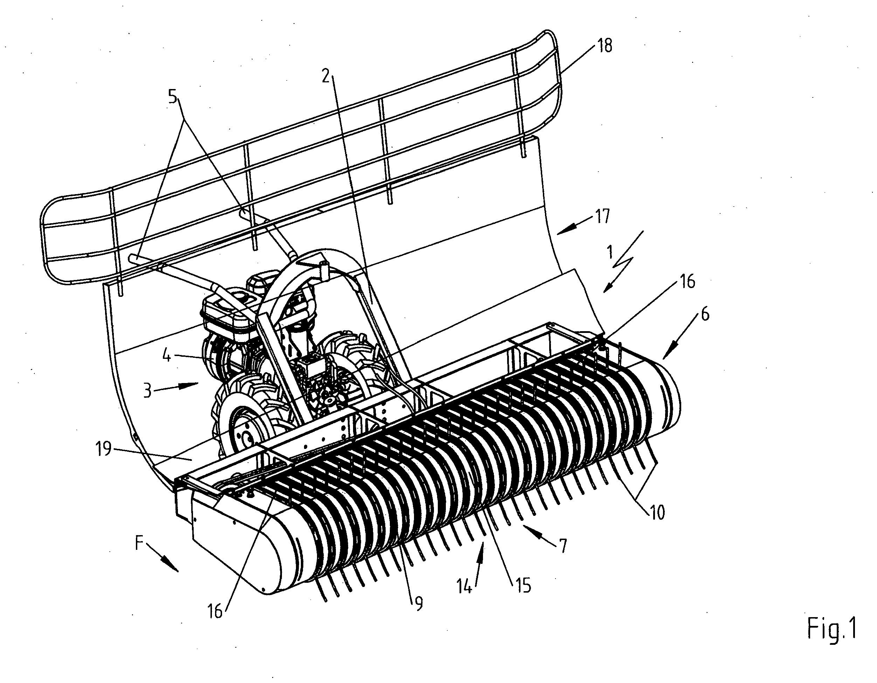

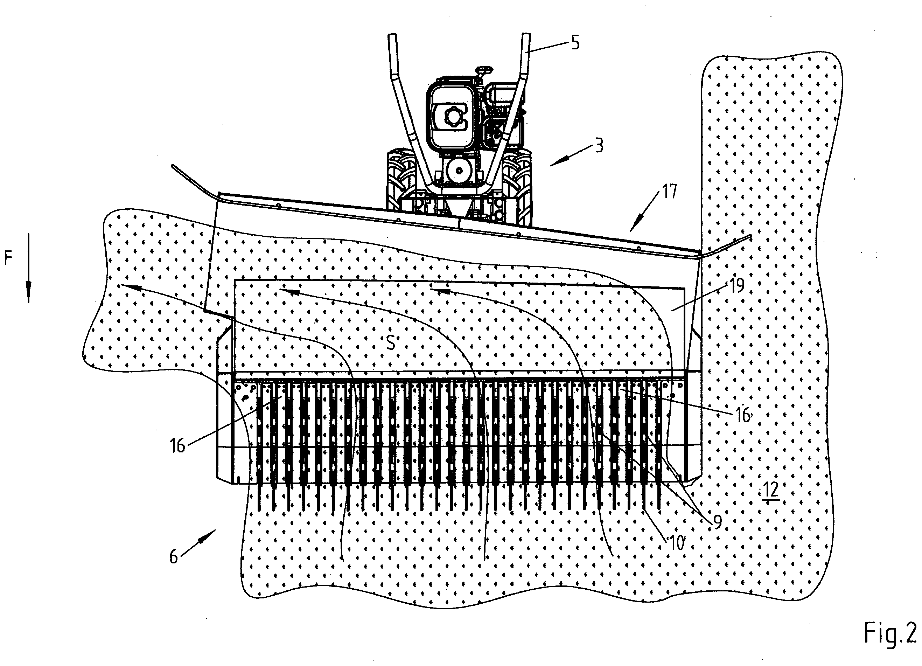

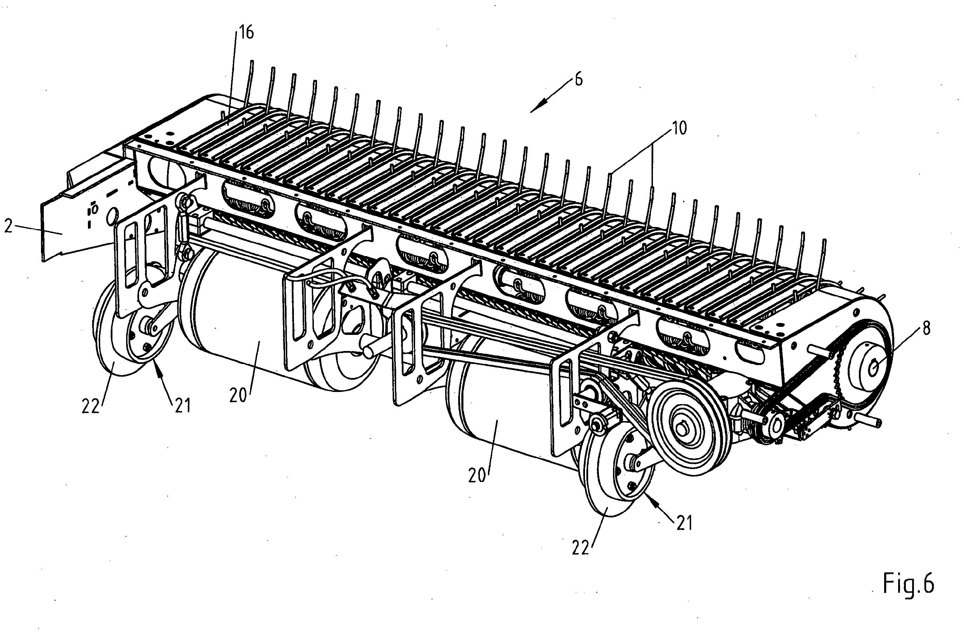

Fig. 1 zeigt eine Fördereinrichtung 1 resp. eine Einrichtung zum Fördern von gemähtem, auf der Bodenoberfläche eines landwirtschaftlichen Feldes liegenden Halmgut 12, wie Gras, Heu, Emd oder dgl. Erntegut. Die Fördereinrichtung 1 weist ein Gestell 2 auf, durch welches sie mit einer einachsigen Arbeitsmaschine 3, beispielsweise deren Fahrwerk oder Frontausleger verbunden ist. Die einachsige Arbeitsmaschine ist auch als Motormäher bekannt und weist an der Frontseite einen von einer Zapfwelle angetriebenen Mähbalken auf, der zum Anbau der Fördereinrichtung 1 demontierbar ist. Die in Fig. 1 dargestellte Arbeitsmaschine 3 ist selbstfahrend, mit einem Verbrennungsmotor 4 ausgestattet und mittels Holmen 5 von einer Bedienungsperson lenk- und steuerbar. Wie der Mähbalken, so ist auch die Fördereinrichtung 1 an der Frontseite der Arbeitsmaschine 3 befestigt und mit deren Zapfwelle antriebsverbunden. Pfeil F vermittelt die Fortbewegungs- resp. Arbeitsrichtung der Maschine. Die Fördereinrichtung 1 ist an der Vorderseite mit einer Aufnahmevorrichtung 6, vorzugsweise einem Pick-up, ausgebildet, die sich quer zur Fortbewegungsrichtung F der Maschine erstreckt. Diese Aufnahmevorrichtung 6 besteht aus einem angetriebenen Zinkenrotor 7, der an einer quer zur Fortbewegungsrichtung F gelagerten Welle 8 (Fig. 6) nebeneinander angeordnete, gemeinsam drehende Zinkenräder 9 mit vorzugsweise gesteuerten Förder- oder Arbeitszinken 10 aufweist. Der Zinkenrotor 7 dreht zur Aufnahme des auf der Bodenoberfläche 11 (Fig. 2) liegenden Halmguts 12 in Bodennähe -gemäss Pfeil P- gleichsinnig zur Fortbewegungsrichtung F. Die Förderzinken 10 heben das Halmgut 12 von der Bodenoberfläche 11 ab resp. an und transportieren es in den oberschlächtigen Förderbereich des Zinkenrotors 7, wo es anschliessend von den nach unten tauchenden Förderzinken 10 gelöst und an einen der Aufnahmevorrichtung 6 nachgeschalteten Förderabschnitt 13 der Fördereinrichtung 1 übergeben wird. Die Förderwirkung auf dem Förderabschnitt 13 entsteht durch die vom Zinkenrotor 7 auf das nachfolgende Halmgut 12 ausgeübte Förderkraft resp. Förderwirkung, mit der das Halmgut 12 entgegen der Fortbewegungsrichtung F der Maschine vorangestossen wird. Der Förderabschnitt 13 könnte zum selben Zweck durch nebeneinander, in Förderrichtung P umlaufende endlose Förderriemen ausgebildet sein. Der Förderabschnitt 13 ist im Anschluss an den Zinkenrotor 7, dessen Förderzinken 10 im Förderbereich gegenüber einem konzentrisch angeordneten Leitorgan 14, aus zwischen den Zinkenrädern 9 angeordneten Leitlamellen 15, auch Korbbänder genannt, beispielsweise anstelle von umlaufenden Förderriemen, durch an die Leitlamellen 15 angesetzte Stützlamellen 16 ausgebildet, auf denen das Halmgut 12 in Förderrichtung Z gleitet.
Im Anschluss an den Förderabschnitt 13 wird das Halmgut 12 weiterhin in einem Förderstrom S gegen ein nach oben verlaufendes, mit dem Gestell 2 verbundenen Anstellorgan 17, das den Förderstrom nach oben und auf eine bestimmte Seite lenkt, auf der das Halmgut 12 auf der Bodenoberfläche 11 liegt (Fig. 2). Hierzu ist das Anstellorgan 17 durch eine von dem, vorzugsweise etwa horizontalen Förderabschnitt 13 ausgehende, nach oben konkav zum Förderstrom S hin gekrümmten Gleit- oder Anstellfläche ausgebildet, entlang der der Förderstrom S des Halmguts 12 zur einen Seite hin umgelenkt wird.

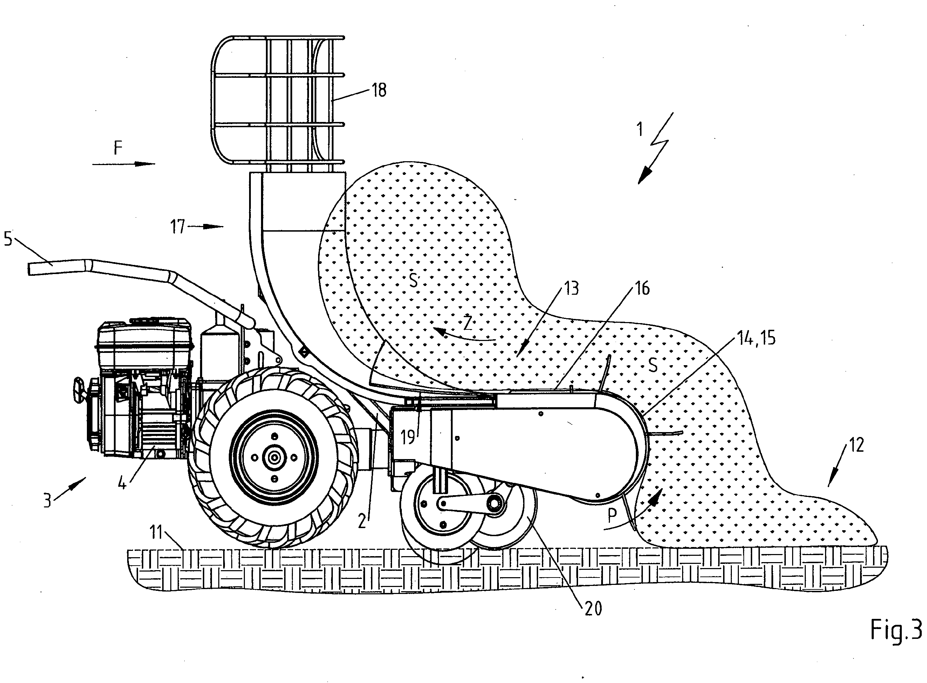

Fig. 3 zeigt die Maschine in einer Seitenansicht und veranschaulicht zwei Stützrollen 20, über die die Fördereinrichtung 1 auf der Bodenoberfläche 11 abgestützt ist, sodass während der Fortbewegung ein weitgehend gleichmässiger Abstand der Aufnahmevorrichtung 6 gegenüber der Bodenoberfläche 11 und ein geringer Bodendruck sowie eine günstige Manövrierfähigkeit der Maschine entsteht.

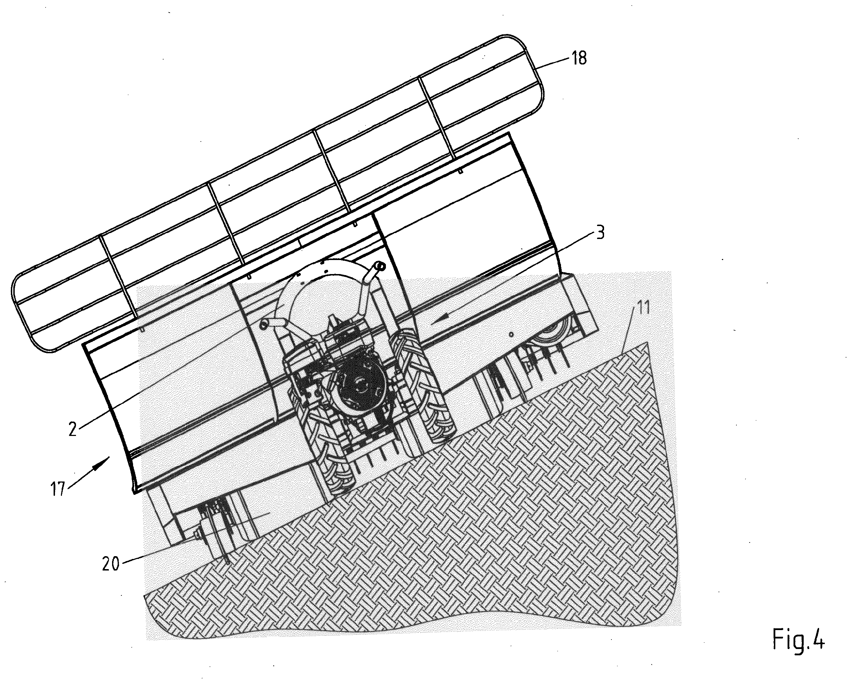

Fig. 4 vermittelt die Maschine von der Bedienungsseite aus, in einer Hanglage.

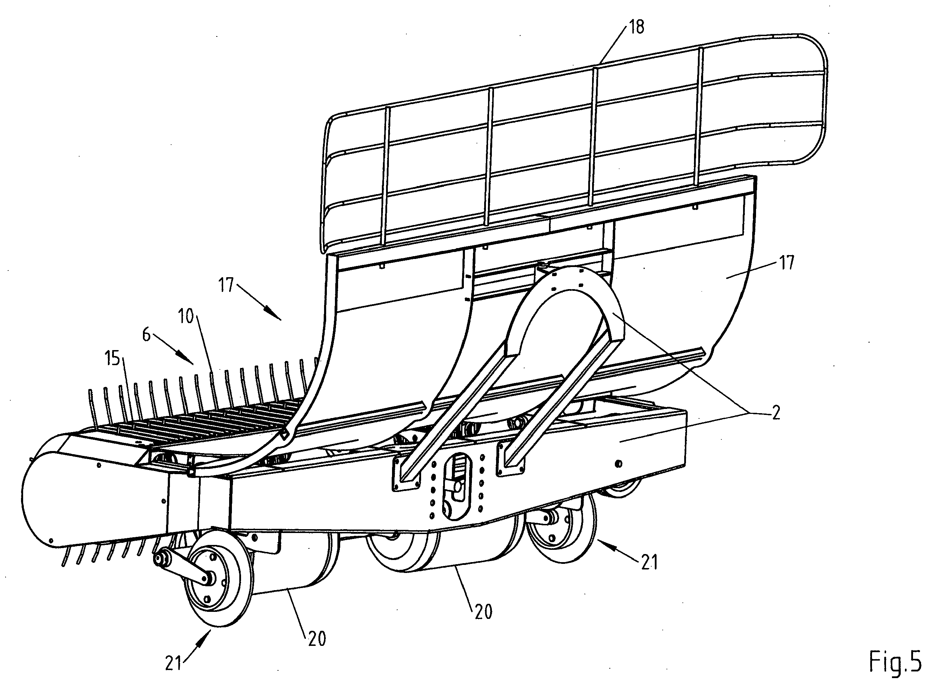

In Fig. 5 ist dieselbe Ansicht räumlich dargestellt. Insbesondere in Hanglagen bei einer Fortbewegung in etwa horizontalen Schichtenlinien tendiert die Maschine aufgrund ihres Gewichtes und dessen unregelmässiger Längsverteilung zum seitlichen Abtriften von der eingeschlagenen Spur bzw. Bahn, was nicht mit Leichtigkeit zu vermeiden oder zu korrigieren ist. Aus diesem Grund ist jeweils benachbart zu den Stützrollen 20 eine an dem Gestell 2 befestigte Spurrolle 21 angeordnet, die am Umfang einen Spurkranz 22 aufweist, der bezüglich der jeweiligen Stützrollenauflagefläche verstellbar ist, d.h. dass die Spurrollen 21 im ebenen bzw. horizontalen Gelände gegenüber den jeweiligen Auflageflächen der Stützrollen 20 angehoben werden können, sodass sie keinen Bodenkontakt haben oder, in geneigtem Gelände wie in Fig. 4, können die Spurrollen 21 gegenüber den Stützrollen 20 abgesenkt werden, so dass ihre Spurkränze 22 bei auf der Bodenoberfläche 11 aufgesetzten Stützrollen 20 in den Boden eintauchen.
Es ist auch möglich, die Stützrollen so mit dem Gestell 2 oder dem Fahrwerk der Arbeitsmaschine 3 über eine Verstellvorrichtung zu verbinden, dass die Fördereinrichtung 1 resp. die Aufnahmevorrichtung 6 bezüglich Abstand zur Bodenoberfläche 11 verstellt werden kann. Solche Ausführungen sind bekannt, sodass sie hier nicht zu beschreiben sind.

Fig. 6 veranschaulicht die Aufnahmevorrichtung 6 und den Förderabschnitt 13 der Fördereinrichtung 1 sowie die Stütz 20- und Spurrollen 21 von der Rückseite der Maschine, nachdem die Arbeitsmaschine 3 und das Anbaugestell sowie das Anstellorgan 17 entfernt worden sind.

## Patentansprüche

1. Einrichtung zur Bergung von gemähtem, auf der gemähten Bodenoberfläche liegenden, landwirtschaftlichen Halmgut, mit einer an der Frontseite einer einachsigen, an Holmen (5) manuell lenkbar geführten, eine angetriebene Fahrachse aufweisenden Arbeitsmaschine (3) angebauten, mit einer frontseitigen Zapfwelle der Arbeitsmaschine (3) antriebsverbundene Fördereinrichtung (1), die eine gemähtes Halmgut (12) mittels angetriebenen Förderzinken (10) von der Bodenoberfläche (11) aufnehmende und weitertransportierende Aufnahmevorrichtung (6) aufweist, wobei die an der Arbeitsmaschine (3) mittels Gestell (2) frontseitig und vor der angetriebenen Fahrachse der Arbeitsmaschine befestigte Aufnahmevorrichtung (6) einen quer zur Fortbewegungsrichtung (F) sich erstreckenden und durch die Zapfwelle angetriebenen Zinkenrotor (7) aufweist, der durch an einer Welle (8) nebeneinander angeordnete, gemeinsam und in Bodennähe gleichsinnig zur Fortbewegungsrichtung (F) drehende Zinkenräder (9) mit abstehenden Förder- oder Arbeitszinken (10) ausgebildet und auf der Bodenoberfläche (11) abgestützt ist.

2. Einrichtung nach Anspruch 1, **dadurch gekennzeichnet, dass** die Förder- und Arbeitszinken (10) vorzugsweise gesteuert und in einem oberschlächtigen Förderbereich des Zinkenrotors (7) nach unten tauchend von dem Halmgut (12) sich lösend ausgebildet sind.

3. Einrichtung nach Anspruch 2, **dadurch gekennzeichnet, dass** zwischen den Zinkenrädern (9) Leitlamellen (15) eines Leitorgans (14) angeordnet sind.

4. Einrichtung nach einem der Ansprüche 1 bis 3, **dadurch gekennzeichnet, dass** an den oberschlächtigen Förderbereich, der zum Weitertransport des Halmguts (12) ausgebildeten Aufnahmevorrichtung (6) ein das Halmgut (12) weiterfördernder Förderabschnitt (13) angeordnet ist.

5. Einrichtung nach einem der Ansprüche 1 bis 4, **dadurch gekennzeichnet, dass** die Fördereinrichtung (1) durch wenigstens eine mit dem Gestell (2) verbundene Stützrolle (20) ausgebildet ist, derart, dass ein weitgehend gleichmässiger Abstand der Aufnahmevorrichtung (6) zur Bodenoberfläche (11) entsteht.

6. Einrichtung nach Anspruch 5, **dadurch gekennzeichnet, dass** benachbart zu einer Stützrolle (20) eine einen Spurkranz (22) aufweisenden, gegegenüber der Stützrolle (20) höhenverstellbare Spurrolle (21) angeordnet ist.

7. Einrichtung nach Anspruch 6, **dadurch gekennzeichnet, dass** die Spurrolle (21) in Fortbewegungsrichtung (F) betrachtet ausserhalb der Stützrolle (20) angeordnet ist.

## Claims

1. Device for collecting mown agricultural crops lying on the mown surface, comprising a conveying device (1) that is mounted at the front of a single-axle working machine (3) steerable manually via handlebars (5) and having a driven axle and that is operatively connected to a front power take-off shaft of the working machine (3), said conveying device having a pick-up device (6) picking up mown crops (12) from the ground surface (11) by means of driven conveying tines (10) and transporting them further, wherein the pick-up device (6) attached by means of a frame (2) to the front of the working machine (3) and in front of the driven axle of the working machine has a tine rotor (7) extending transversely to the direction of movement (F) and driven by the power take-off shaft, said tine rotor being formed by tine wheels (9) arranged alongside one another on a shaft (8), rotating together and in the vicinity of the ground in the same direction as the direction of movement (F) and provided with projecting conveying or working tines (10) and said tine rotor being supported on the ground surface (11).

2. Device according to claim 1, **characterised in that** the conveying and working tines (10) are designed to disengage from the crops (12) preferably in a controlled manner and plunging downwards in an overshot conveying region of the tine rotor (7).

3. Device according to claim 2, **characterised in that** guide plates (15) of a guide element (14) are arranged between the tine wheels (9).

4. Device according to one of claims 1 to 3, **characterised in that** a conveying section (13) transporting the crops (12) further is arranged at the overshot conveying region of the pick-up device (6) designed for further transport of the crops (12).

5. Device according to one of claims 1 to 4, **characterised in that** the conveying device (1) is formed by at least one supporting roller (20) connected to the frame (2) so as to result in a substantially uniform distance from the pick-up device (6) to the ground surface (11).

6. Device according to claim 5, **characterised in that** a guide roller (21) having a flange (22) is arranged adjacent to a supporting roller (20) and is vertically adjustable relative to the supporting roller (20).

7. Device according to claim 6, **characterised in that** the guide roller (21) is arranged outside the supporting roller (20) as viewed in the direction of movement (F).

## Revendications

1. Dispositif pour la récupération de paille agricole fauchée, reposant sur la surface de sol fauchée, avec un dispositif de transport (1) porté sur le côté avant d'une machine de travail (3) à un essieu, guidée manuellement en direction avec des mancherons (5) et présentant un essieu propulseur entraîné, raccordé par entraînement à une prise de force avant de la machine de travail (3), qui présente un dispositif de reprise (6) reprenant à la surface du sol (11) et transférant la paille fauchée (12) au moyen de dents de transfert entraînées (10), dans lequel le dispositif de reprise (6) fixé à la machine de travail (3) au moyen d'un châssis (2) à l'avant et devant l'essieu propulseur entraîné de la machine de travail présente un rotor à dents (7) s'étendant transversalement à la direction d'avancement (F) et entraîné par la prise de force, qui est formé par des roues à dents (9) disposées l'une à côté de l'autre sur un arbre (8) et tournant ensemble et à proximité du sol dans le même sens que la direction d'avancement (F) avec des dents saillantes de transport ou de travail (10) et s'appuie sur la surface du sol (11).

2. Dispositif selon la revendication 1, **caractérisé en ce que** les dents de transport et de travail (10) sont de préférence commandées et sont configurées de façon à plonger vers le bas dans une zone de transport supérieure du rotor à dents (7) et à se séparer de la paille (12).

3. Dispositif selon la revendication 2, **caractérisé en ce que** des lamelles de guidage (15) d'un organe de guidage (14) sont disposées entre les roues à dents (9) .

4. Dispositif selon l'une quelconque des revendications 1 à 3, **caractérisé en ce qu'**une section de transport (13) transférant la paille (12) est disposée sur la zone de transport supérieure du dispositif de reprise (6) configuré pour le transfert de la paille (12).

5. Dispositif selon l'une quelconque des revendications 1 à 4, **caractérisé en ce que** le dispositif de transport (1) est formé par au moins un rouleau d'appui (20) relié au châssis (2), de telle manière qu'il existe une distance largement uniforme entre le dispositif de reprise (6) et la surface du sol (11) .

6. Dispositif selon la revendication 5, **caractérisé en ce qu'**un rouleau de guidage (21) présentant un boudin de roue (22), réglable en hauteur par rapport au rouleau d'appui (20), est disposé à proximité du rouleau d'appui (20).

7. Dispositif selon la revendication 6, **caractérisé en ce que** le rouleau de guidage (21) est disposé à l'extérieur du rouleau d'appui (20) en considérant la direction d'avancement (F).
